# EUROPEAN PATENT SPECIFICATION

(11) **EP 1 226 756 B1**
(45) Date of publication and mention of the grant of the patent: **24.05.2006**
(21) Application number: 02425007.8
(22) Date of filing: 09.01.2002
(51) Int. Cl.: A21C 11/00

(54) **Machine for producing "taralli"**
Vorrichtung zur Herstellung von "Taralli"
Dispositif de fabrication de "taralli"

(30) Priority: 12.01.2001 IT BA010003
(43) Date of publication of application: 31.07.2002
(73) Proprietor: Perta, Vito Oronzo, 70011 Alberobello (BA) (IT); Perta, Gianfranco, 70011 Alberobello (BA) (IT)
(72) Inventor: Perta, Vito Oronzo, 70011 Alberobello (BA) (IT); Campanella, Gianvito, 70011 Alberobello (BA) (IT)

(56) References cited:
- EP-A- 0 329 235
- EP-A- 0 490 190
- DE-A- 4 429 382
- US-A- 2 584 514
- US-A- 3 315 618

## Description

### Field of the invention

The present invention relates to a process of and to a machine for producing food products having the general shape of a "ciambella", i.e. of a loop, and made from a dough of cereal flour, risen or not, salted or sweetened, with or without dietetic enrichment elements such as bits of dried fruit or olives, namely of products such as: "taralli", "friselle", bread, etc.

### Background art

As regards the production, in particular, of "taralli", which are typical Mediterranean products, it is traditionally achieved manually.

About twenty years ago some processes of and machines for producing such products have been proposed.

A process of industrial production of loop-shaped food products and made from a dough of cereal flour, comprises the following cycle of steps:
- drawing the dough, through a die, into a plurality of parallel dough beads;
- conveying on a band and orienting the plurality of dough beads, by means of a separator;
- cutting the plurality of oriented dough beads, by means of cutting means perpendicular to the conveying direction, in a plurality of dough segments having a given length and a leading portion and a trailing portion;
- shaping the food products from the plurality of dough segments tangentially presented to a plurality of conformation means, by rolling up, one after the other, the leading portion and the trailing portion of each dough segment round a corresponding conformation means, through a plurality of rolling means, each one being intended to rotate round a corresponding conformation means, and by radial pressing of the juxtaposed ends of the leading and trailing portions of each dough segment, thus conformed round the corresponding conformation means, through the corresponding rolling means, and
- lifting the cutting and the conformation means, while separating from these latter the food products thus shaped or conformed.

A known machine for implementing the above disclosed process essentially comprises the following units:
- a unit for drawing a plurality of dough beads having a given diameter from a dough, comprising a die;
- a unit for shaping the "taralli'" from the dough beads previously cut in dough segments having the desired length, and
- between these units, a unit for orienting the plurality of dough beads made by the first unit so as to present them to the third unit with a given orientation.

In the unit for shaping the "taralli", each dough segment is presented tangentially to a cylindrical conformation means, round which the dough segment is rolled up so as to obtain a "tarallo". The rolling up of each dough segment is achieved through a means comprising two elements acting one after the other, respectively, on each half portion of the dough segment: such rolling means are driven so as to push the corresponding half portion perpendicularly to the conveying direction of the dough bead and to roll up this half portion round the cylindrical conformation means, the double movement of the rolling means being obtained by a rack coupled to a plurality of gears.

Now, the rolling up of the two half portions of the each dough segment is achieved so as to obtain the juxtaposition of the their ends, thus giving rise to a double radial projection (one for each dough segment end) which changes the traditional shape of a "tarallo"

Another background to the present invention is illustrated in the German document

DE-A-4 429 382 which discloses a process of and a device for bending and then loop-shaping a plurality of dough segments cut from dough beads, while laying down the loop-shaped products into individual containers.

The bending is achieved by giving respectively to the middle portion and to the end portions of each dough segment a different progression speed, the middle portion speed being greater than the end portions speed. To that effect, use is made of distinct endless conveyor bands: one first central band for the middle portion and two lateral bands for the end portions progressing at the corresponding speeds according to a direction perpendicular to the dough segment before its bending.

The loop-shaping of each bent dough segment is achieved round a cylindrical conformation means by simultaneously rolling up the bent end portions of the dough segment. To that effect, a plurality of cylindrical conformation means are tightly arranged on both the upper side and the lower side of a second endless central conveyor band, following the first one, the conformation means being equally spaced apart along the longitudinal axis of the second central band, the middle portion of each dough segment - and thus this latter as a whole - being pushed by the corresponding conformation means while passing from the first central band to the second one; furthermore, two lateral bent fingers acting as rolling means push centrally the end portions of each dough segment against the corresponding conformation means, while simultaneously stopping the progression of the second (and, of course, the first) central band.

The laying down of the thus loop-shaped dough segments into individual containers, which consist of cups whose radial dimension corresponds to that of a loop-shaped product, is achieved, according to one embodiment, by placing - like a cap - a cup on the corresponding conformation means of the upper side of the second central band and centring it with respect to the conformation means through a central spur jutting out from the bottom of the cup and intended to get, with a given play, into a corresponding axial hole of the conformation means, in order to be put upside down, together with the loop-shaped product, when the conformation means passes from the upper side to the lower side of the second central band: during the conformation means and cup reversal, each cup slides along a bent guide avoiding its departure from the conformation means, the reversed cup being received by another endless conveyor band at the lower end of the guide.

### Brief description of the invention

The present invention aims at the improvement of the production of food products of the type disclosed above and provides a process of and a machine for producing such products which are specified - as these latter - in the independent claims appended to this description.

Other features of the process and the machine are specified in the dependent claims, which are appended to the description too.

An advantage of the present invention is that it allows to obtain industrially food products of the type disclosed above which keep the quality of the same products made manually, while requiring a production time which is substantially reduced.

### Best mode of carrying out the invention

It is now disclosed, essentially by way of example only, a preferred embodiment of the process of producing food products of the above mentioned type and of the machine for implementing such a process, which are in accordance with the present invention, with reference to the figures appended to this description and summed up synthetically hereinafter:
- Fig. 1 is a perspective view, with some portions taken off, of the shaping unit of the machine according to the invention;
- Fig.2 is a perspective view of the shaping device with which the shaping unit shown in Fig. 1 is equipped;
- Fig.3 is a frontal view according to the conveying direction of the conveying band of the shaping unit;
- Fig.4 is a perspective view, with some portions taken off, of the device shown in Fig.2;
- Fig.5 is a perspective view, with some portions taken off, according to a direction perpendicular to the conveying band, showing essentially the mechanism of the device driving the rolling means of the shaping device;
- Fig.6 is an exploded perspective view of one the conformation means and of the corresponding rolling means;
- Fig.7, Fig.8 and Fig.9 are exploded perspective views of alternative embodiments of the conformation means with respect to that shown in Fig.6;
- Fig. 10, Fig. 11 and Fig. 12 show the conformation process.

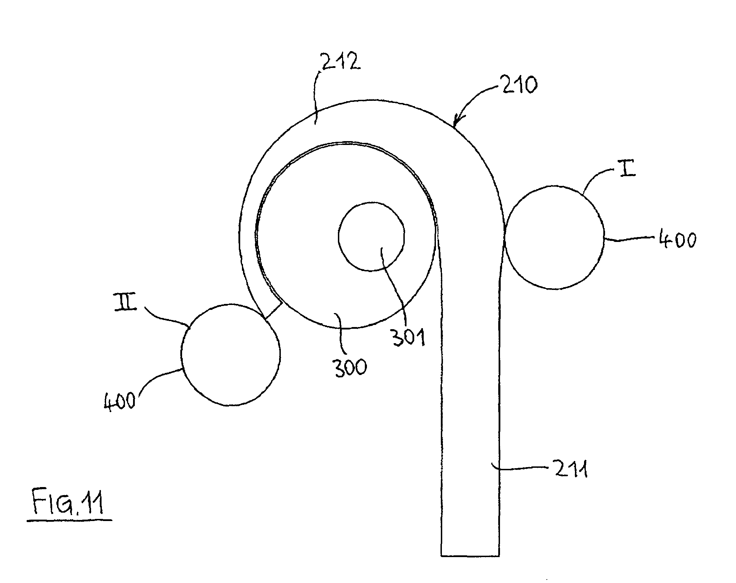

The present invention provides a process (see in particular Fig.10 to Fig.12) of producing loop-shaped food products 200 of the above disclosed type, wherein by rolling up, one after the other, the leading portion 211 and the trailing portion 212 of each dough segment 210 round a conformation means 300 which is eccentric with respect to its own shaft 301, through at least a plurality of rolling means 400 rotating around their own shaft 401 and the eccentricity 301 of said conformation means 300, the ends of the leading and trailing portions 211 and 212 of each dough segment 210 are radially pressed and superimposed by means of the said rolling means 400, and during the rolling up each one of said dough portions is worked by the corresponding rolling means 400.

During the reduction in practice of the invention it has effectively resulted that the rotation of the rolling means round its own axis, during its revolution, is essential to the successful rolling up of each one of the leading and trailing portions of each dough segment round the corresponding conformation means: in such a way, it is reproduced the manual working of the two half portions of a dough segment which is effectively accomplished by those people who make manually this type of food products immediately before the manual welding of their ends in order not altering the texture of the malleable dough, i.e. in order to achieve the stretching of the two half portions without altering the dough and, thus, in order to obtain the desired final product. The rotation of the rolling means round its own axis is accomplished in a direction which is concord with the revolution direction, i.e. with the direction of rolling up round the conformation means. Moreover, it has resulted that the eccentric character of the conformation means with respect to their own support shaft is also essential for the correct welding of the radially superimposed ends of each dough segment.

Furthermore, during the rolling up of each one of the half portions of each dough segment it is exerted thereon a pressure which gradually increases from the middle portion of each dough segment towards the corresponding end, in such a way that the radial pressure which is exerted on the superimposed leading and trailing portions of each dough segment is increased with respect to the pressure exerted on the middle portion, thus obtaining the effective welding of the superimposed ends of each dough segment.

Always in accordance with the invention, the gradual increase of the pressure exerted on each one of the half portions of each dough segment is obtained by reducing the radial distance separating the rolling means from the conformation means during the rolling up. In particular, the reduction of the radial distance separating the rolling means from the corresponding conformation means is obtained through an asymmetrical transverse section of the conformation means with respect to the rotation axis of the rolling means, whereas the rolling up of one of the half portions of each dough segment is obtained by causing the rotation of the corresponding rolling means according to one direction, from a rest position, round the corresponding conformation means, over an angle higher than 180° and lower than 360°, the rolling up of the other half dough segment portion being obtained by causing the rotation of the rolling means at least once according to an opposite direction over an angle equal to the former angle increased of 360°, so as to bring again the rolling means in the rest position.

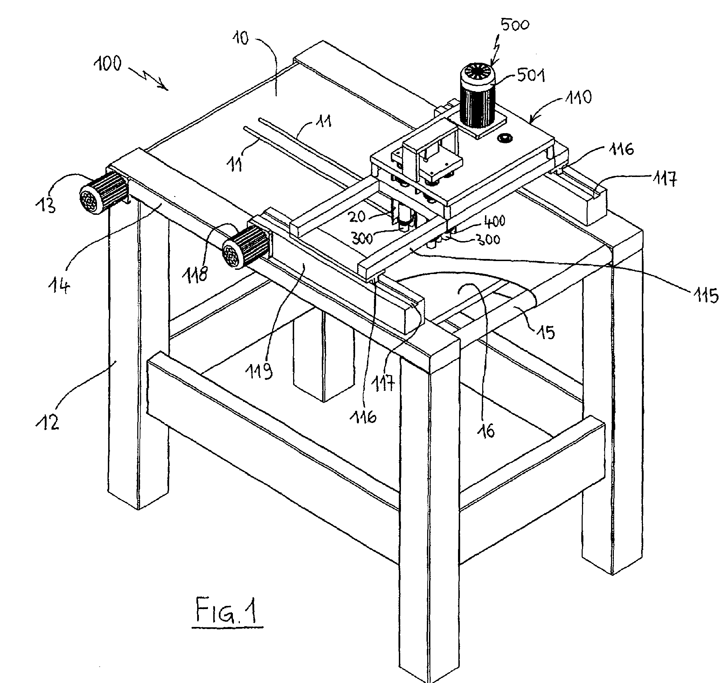

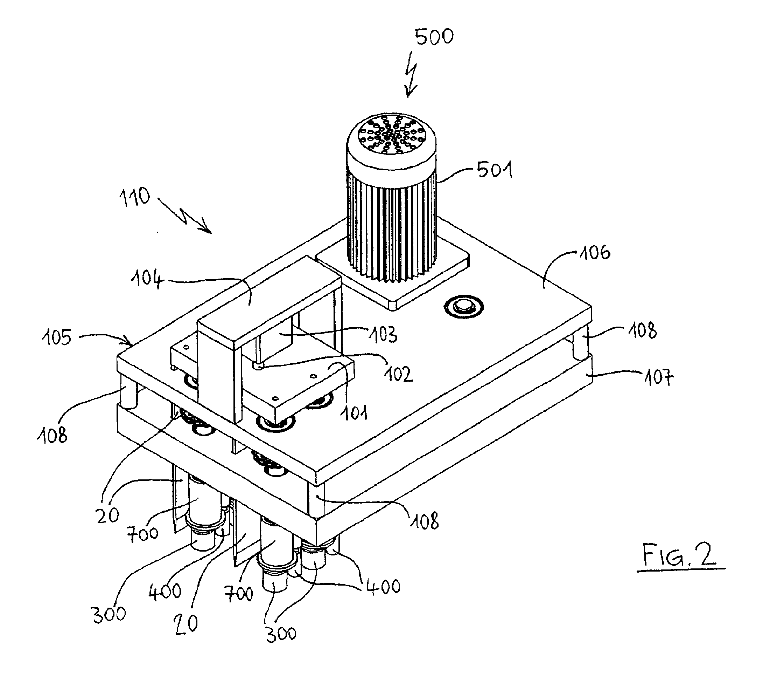

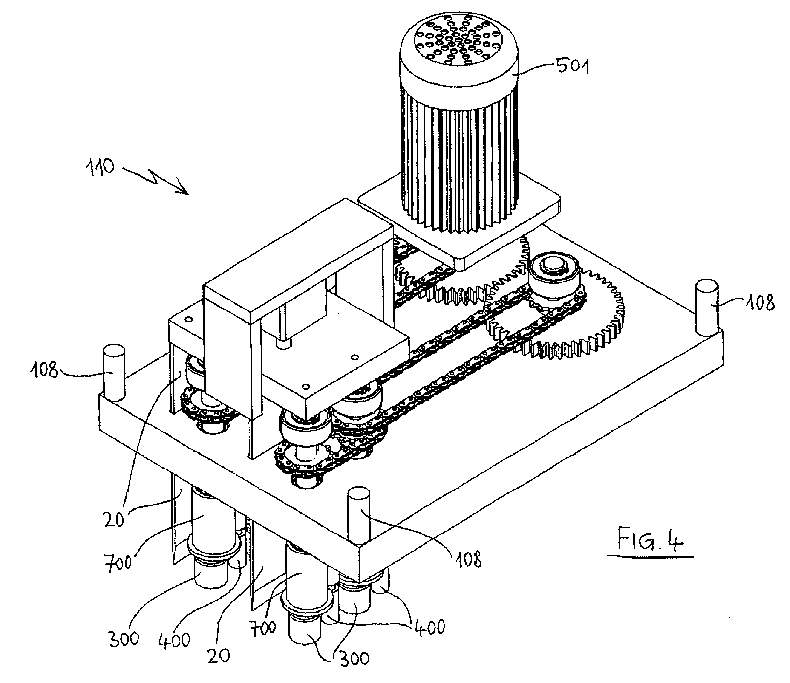

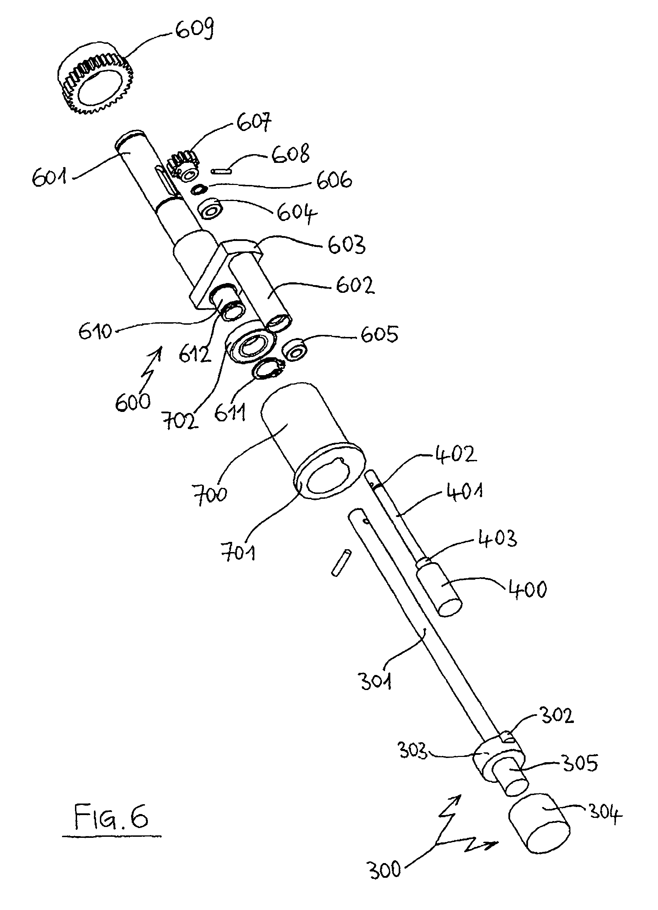

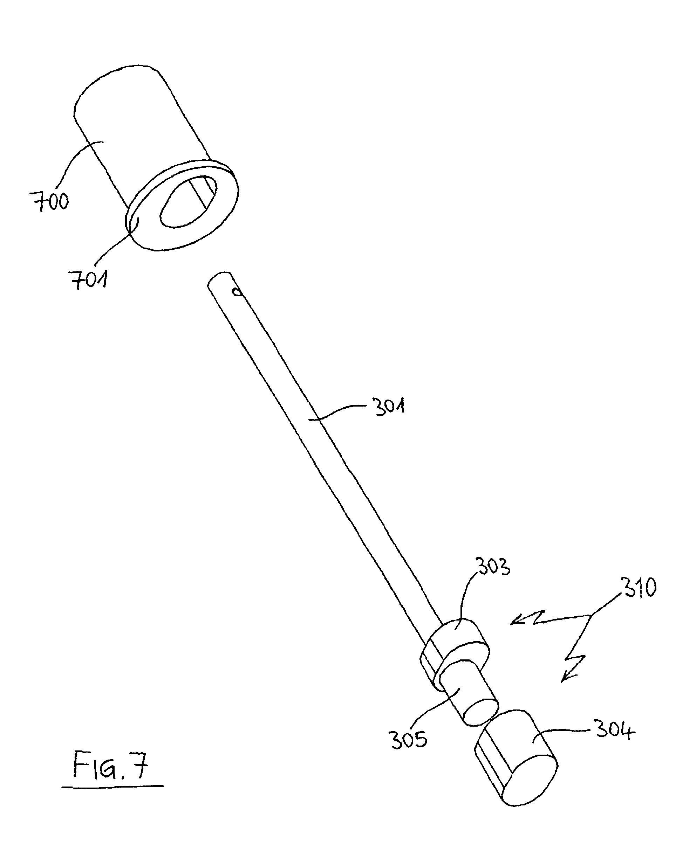

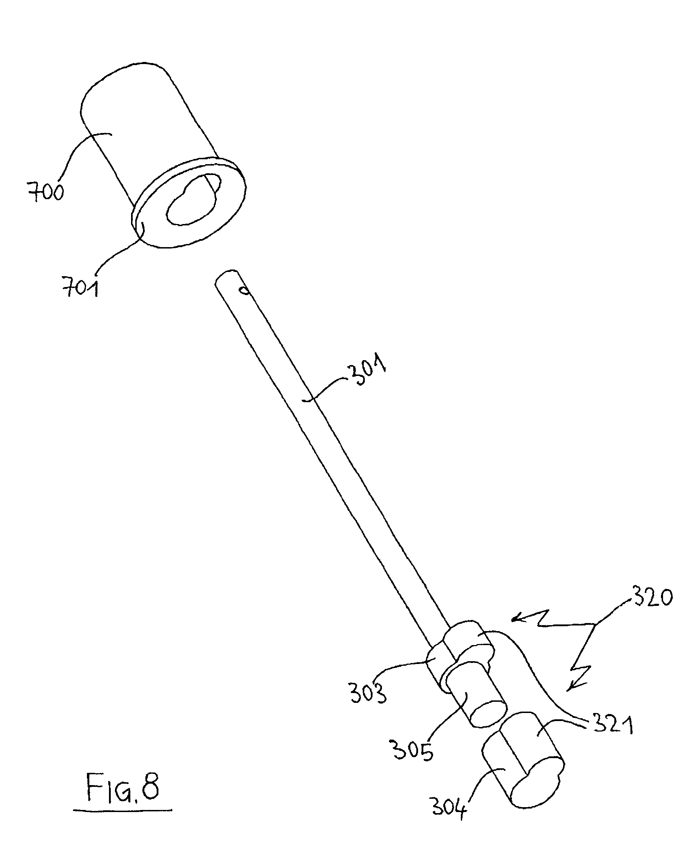

Before disclosing a machine for implementing the process according to the invention, it is useful to remind that a machine for producing loop-shaped food products, made from a dough of cereal flour, essentially comprises a die intended to transform the dough into a plurality of parallel dough beads, a separator of such dough beads (the die and the separator are not shown in the drawings as they are known in the art) in order to present them with a given orientation to a shaping unit of the above mentioned food products. Such a shaping unit, referenced by 100 in Fig.1, comprises a conveying band 10 of the plurality of dough beads 11 mounted on a support casing 12 and driven by a motor 13 which drives also, through a mechanism contained in the horizontal bar 14, some end rolls 15, of which only one can be seen in the figure after taking off a portion of the conveying band 10: in such a way it is also possible to see a rigid plate 16 underlying the upper portion of the band and intended to allow the cutting of the dough beads 11 and the conformation of the food products 200 (see also Fig.12), which would be otherwise impossible because of the flexible character of the band. The shaping unit 100 comprises a shaping device 110, shown in detail in Fig.2 to Fig.5, which comprises two pairs of conformation means 300 (see also Fig.6) of the food products 200, such pairs being arranged according to two mutually parallel rows, perpendicular to the conveying band 10 (of course, the representation of only two pairs of conformation means and of only two rows is essentially due to reasons of simplification of the drawings: this means that generally the shaping unit comprises a plurality of conformation means arranged according to a plurality of rows of the above mentioned type).

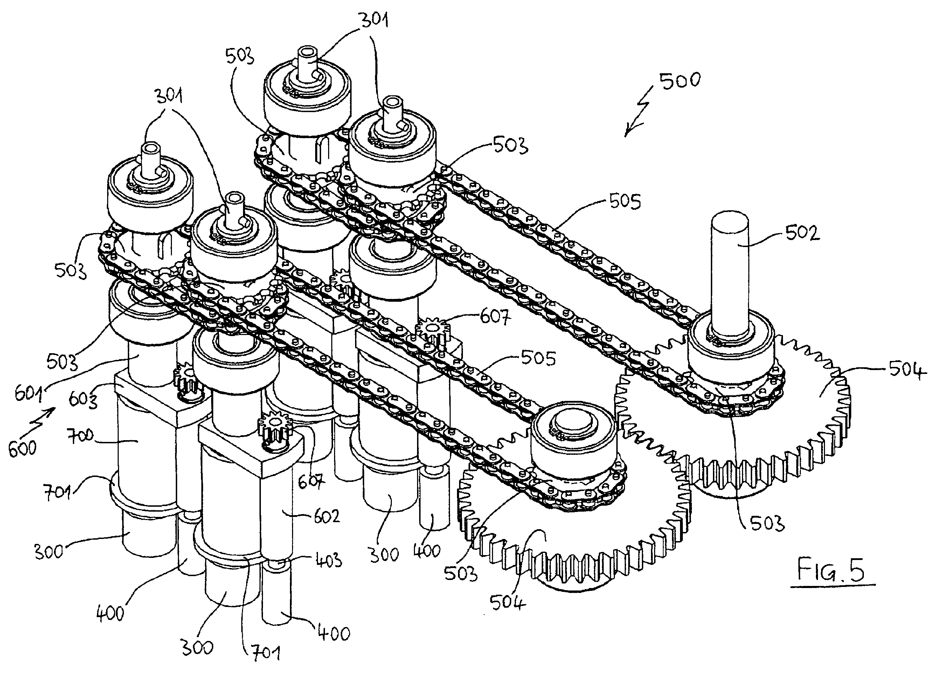

Each conformation means 300 is connected to a vertical support shaft 301 which is fastened, at its upper end, to a plate 101 centrally connected to the lower end of a piston 102 of a cylinder 103 pneumatically driven and intended to act on the plate 101 so as to allow the lowering and the lifting thereof during the conformation process of the food products: the lowering of the plate 101, and thus of the conformation means 300, is necessary for shaping such products, whilst their lifting is necessary for separating the products already conformed from the conformation means and thus repeating the production cycle. The piston 102 is fastened to a structure 104 mounted on the support casing 105 of the shaping device 110: such a support casing 105 comprises essentially two plates 106 and 107 kept apart from each other by the separation means 108 and perforated in a manner that will be disclosed hereinafter. The shaping unit also comprises means 20 for cutting the dough beads 11 into dough segments 210 (see Fig. 10) having a given length and diameter, which are function of the food product to be shaped and having a leading portion 211 and a trailing portion 212, with respect to the conveying direction of the band 10: such cutting means 20 comprise at least one blade for each row of conformation means 300 (this means that the blade of each row may comprise a plurality of elements juxtaposed along its length). A plurality of rolling means 400 (see also Fig. 6) cooperates with the plurality of conformation means 300 in order to roll up, one after the other, the two leading and trailing portions, respectively 212 and 211, of the dough segments 210 round the conformation means. Each rolling means 400 is connected to a vertical support shaft 401 and is intended to rotate round an axis consisting of the vertical support shaft 301 of the corresponding conformation means 300, under the action of a driving device 500. This latter comprises a motor 501 mounted on the upper perforated plate 106 of the support casing 105, whose motor shaft 502 drives (see also Fig.5), through the gears 503 to 504 and the chains 505 and 506, the rolling means 400 by means of a mutual connecting device which will be disclosed hereinafter. The plates 106 and 107 of the support casing 105 are perforated so as to allow the crossing of the shafts and the assembly of the corresponding ball bearings.

In accordance with the invention, each rolling means 400 is intended to rotate round its own axis during the revolution round the corresponding conformation means 300 as already disclosed above, such rotation round its own axis is essential in order not to alter the texture (the "thread", in jargon) of the malleable dough of the dough segment 210, previously obtained through its working in the die, under the action of the tangential, and thus axial, stretching or pulling of each one of the two half portions of such a dough segment during the revolution of the satellite rolling means 400 round the conformation means 300; this is obtained by superposing to the pulling movement of the malleable dough a movement-precisely impressed by the rotation of the rolling means round its own axis-intended to work the dough according to a direction perpendicular to such a pulling movement, in order to reproduce the manual working of each one of the two half portions of the dough segment immediately before the welding of their ends.

Always in accordance with the invention, each conformation means 300 has a transverse section which is asymmetrical with respect to the rotation axis 301 of the rolling means 400 of the corresponding dough segment 210: such an asymmetry causes the effective welding of the dough segment ends (see Fig. 12) by radial pressure of such superimposed ends against the conformation means 300 during the rotation of the rolling means 400-as it will be disclosed in detail in relation to Fig.10 to Fig.12-in order to obtain food products having the shape traditionally obtained manually. It is easy to understand that, in order to cause this to happen, the leading portion of the dough segment must necessarily attack the conformation means tangentially on the side which is the nearest to the revolution axis of the rolling means: only in such a way, because of the above mentioned asymmetrical character, the radial pressure exerted by the rolling means on the dough segment against the conformation means increases gradually from the middle portion of the dough segment towards each one of its ends, in order that the increased pressure-with respect to the middle portion of the dough segment-exerted at the level of the superimposed ends thereof ensures an effective welding of such ends, thus obtaining a product having the same quality of a manually produced product, and this in spite of the industrial character of the production.

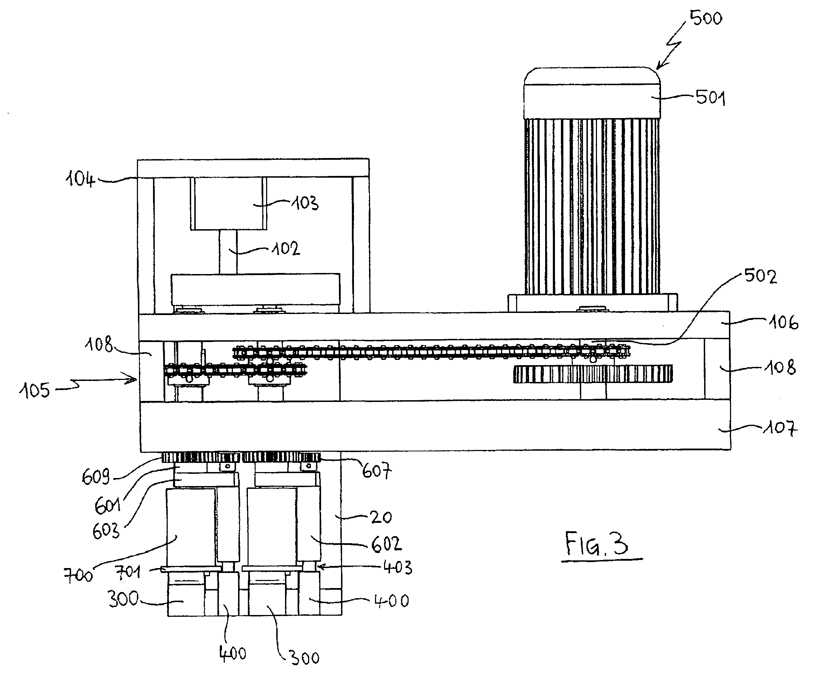

A means 600 connecting the driving means 500 and each one of the rolling means 400 comprises two hollow cylinders 601 and 602, which are kept radial and axially apart through an interconnecting transverse element 603. The first cylinder 601 is coaxial with the support shaft 301 of the corresponding conformation means 300, whilst the second cylinder 602 is coaxial with the support shaft 401 of the same rolling means 400. Such a shaft 401 is mounted so as to rotate freely round itself inside the cylinder 602 by using two ball bearings 604 and 605 (the clastic ring 606, intended to be mounted in the circular groove 402 arranged in the upper end of the shaft 401, aims-as it is well known- at maintaining in position the ball bearing 604, whereas the maintaining in position of the ball bearing 605 is obtained through a recess 403 whose function will be disclosed hereinafter): the rotation of the shaft 401, and thus of the rolling means 400 at the lower end of this shaft, round its own axis is obtained through a gear 607 fastened to the upper end of the shaft 401 through a knuckle pin 608 and intended to engage (see also Fig.3) a gear 609 having a greater diameter and fastened to the lower perforated plate 107 of the support casing 105 of the shaping device 110 so as to be coaxial with the cylinder 601. The means for the separation (or removal) of the food product 200, conformed round each conformation means 300, during the lifting of this latter, consists of a cylindrical cap 700 having at its base a circular projecting rim 701 which is coaxial with the support shaft 301 of the corresponding conformation means 300, intended to allow the lowering and lifting movement of the conformation means, and which ensures the separation of the food product from this latter during its lifting by impact against the projecting rim 701 itself: the recess 403 (mentioned above: see Fig.6 and Fig.5) arranged at the upper end of the rolling means 400 aims not only at offering a seat to the ball bearing 605, but also at allowing the insertion of such a projecting rim 701 therein. The cap 700 is maintained in position through a ball bearing 702, intended to allow the rotation of the connecting means 600, fastened to the lower end 610 of the cylinder 601 and arranged in a seat (not shown) made in the upper end of the cap 700, the maintaining in position of the ball bearing 702 being ensured by the elastic ring 611 intended to be mounted in the circular groove 612 arranged in the above mentioned lower end 610. The transverse section of the conformation means 300 shown in Fig. 1 to Fig.6 is circular and has an axis which is eccentric (see in particular Fig.6) with respect to its axis 301, so as to comply with the above mentioned asymmetrical condition which is essential for the correct welding of the superimposed ends of each dough segment; in this case, the cylindrical cap 700 is locked to the rotation round the conformation means 300 through a radial rib 302 arranged on the upper portion 303 of the means 300.

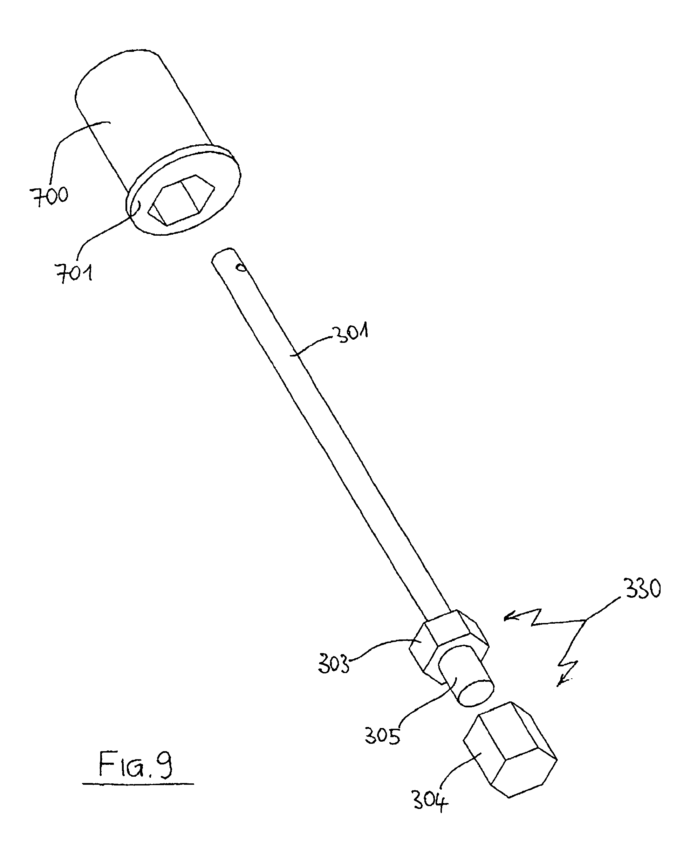

Fig.7 shows an alternative embodiment 310 of the conformation means having an oval transverse section whose axis is eccentric with respect to the axis 301 (as in the embodiment 300).

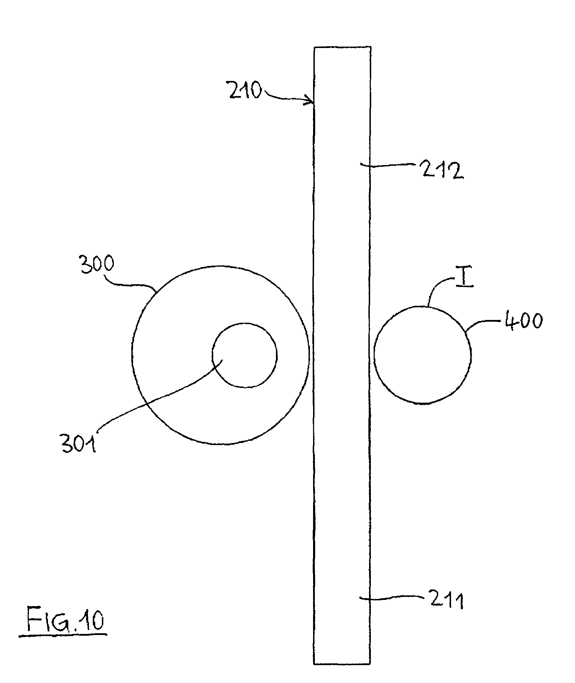

Another alternative embodiment 320 of the conformation means is shown in Fig.8: in this case, the transverse section comprises a first circular portion 304-303 whose axis coincides with the axis 301, and thus symmetrical with respect to this axis, the asymmetrical character of the section as a whole being ensured through at least a second portion which is asymmetrical with respect to the axis 301 and which consists of a radial projection 321 arranged on the whole height of the conformation means 320.

A further alternative embodiment 330 of such a conformation means is shown in Fig. 9, in which the transverse section is polygonal, in particular regular, with the axis eccentric with respect to the axis 301, so as to ensure the above mentioned asymmetrical condition.

In the alternative embodiments shown in Fig.7 to Fig.9 no rotation-locking (i.e. avoiding the rotation) rib like the rib 302 of the embodiment shown in Fig.6 is arranged thereon because the shape of the section in the embodiments shown in Fig.7 and in

Fig.9 naturally ensures such a locking through the upper portion 303 which does not get in contact with the dough segment to be conformed, whereas in the embodiment of Fig.8 such a locking function is exerted by the upper portion of the radial projection 321.

In any case, it is advantageous that the conformation means be removable in function of the type of dough, which can be oily or not. In Fig.6 to Fig.9 the removable character of the conformation means is ensured by rendering the lower portion, which gets in contact with the dough segment to be conformed, separable from the upper portion 303, which has an axial threaded projection 305 on which the lower portion 304 is intended to be screwed. When the dough is not oily, the separable portion 304 is advantageously made from a material which does not stick to a not oily dough, such as teflon or bronze suitable for food contact; whereas, when the dough is oily, the anti-sticking character is ensured by the very oily nature of the dough, this meaning that in this case any material suitable for food contact, such as stainless steel, can be used for the removable portion 304.

As regards the means 400 for rolling up the dough segment, even its transverse section can be circular, as shown in Fig. 1 to Fig.6, or oval or polygonal; furthermore, it is advantageous that the surface of such a rolling means has an axial knurling, at least on a height intended to get in contact with the dough segment.

Of course, the removable character, in particular of the lower portion of the conformation means intended to get in contact with dough segment also applies to the rolling means; this also holds for the anti-sticking requirements mentioned above with regard to the conformation means when the dough is not oily. Even the way in which the rotation of the rolling means round its own axis takes place is important: it can be achieved with a constant speed or with a speed variable according to a given law function of the type of working of the dough segment immediately before the welding of its ends.

In order to avoid the stopping due to the necessity to stop the conveying band after any cutting of the dough beads, so as to produce the food products, and thus in order to increase the production, the shaping device 110 comprises a system for tracking the band causing this latter to advance without any solution of continuity. For this purpose, the device 210 is mounted on a slider 115 (see Fig. 1) comprising two legs 116 intended to slide along two rails 117, fastened to the casing supporting the conveying band, under the action of a motor 118 driving the slider leg adjacent thereto through a mechanism known in the art (for example, a mechanism comprising a cog belt and gears), and arranged inside the support 119 of the corresponding rail: referring to the end of a shaping step of food products, while the conveying band goes on, the slider follows the band so as to attain the same speed of this latter (thus eliminating any relative motion between them): in such a way, even if the band continues to advance, the simultaneous lowering of the means intended to cut the dough beads in dough segments having a given length and of the means for conforming these dough segments in food products can be achieved; at the end of the conformation of such products on the advancing band, the simultaneous lifting of the conformation means and of the cutting means can be achieved as well; then, the slider of the shaping device goes backwards and stops in order to follow once again the conveying band, thus repeating the production cycle. Of course, all these steps are accomplished in very short times; furthermore, in order to comply with the different intervention rates of the different production means, in accordance with what has been disclosed above, stop blocks and timers or equivalent elements, such as encoders, known in the art, can be used.

The above disclosed process of producing food products in accordance with the present invention can be better understood by referring to Fig.10 to Fig.12.

In Fig. 10 it can be seen one of the dough segments 210, with its leading and trailing portions 211 and 212, shown in the position in which it is cut down from one of the corresponding dough beads through the above mentioned cutting means (the dough bead and the cutting means are not shown in Fig. 10 to Fig.12, in which the drawing sheet must be seen as corresponding to the band conveyor): the cutting is achieved in such a way that both portions 211 and 212 of the dough segment 210 have a length substantially equal with respect to the transversal line joining the conformation means 300 to the rolling means 400, this latter being shown in Fig.10 in the rest position; in such a figure it is further possible to appreciate the asymmetrical character of the transverse section of the conformation means 300 with respect to the axis 301 of rotation of the rolling means 400.

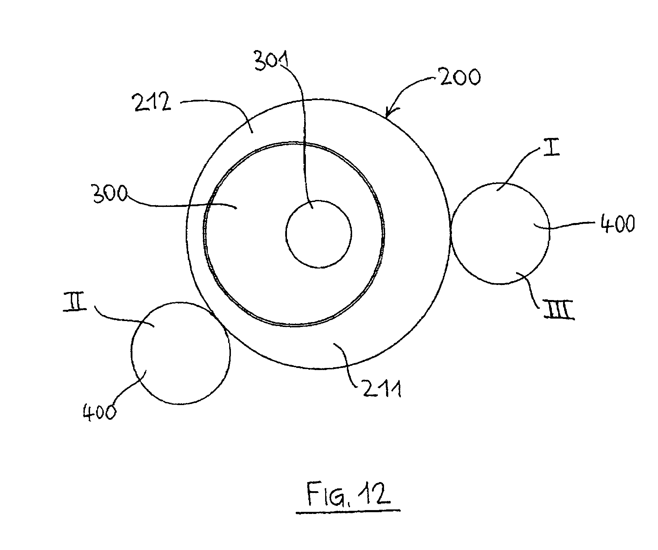

In Fig.11 it is shown the step corresponding to the rolling up of the trailing portion 212 consisting of causing the rolling means 400 to rotate counterclockwise, from the rest position I shown in Fig. 10, over an angle greater than 180°-but lower than 360°, so as not to involve the other half portion of dough segment which is to be rolled up separately from and after the first half portion-thus occupying a position intermediate between 180° and 360°, such the position II shown in Fig.11; as already disclosed above, it is easy to understand that, because of the asymmetrical character of the transverse section of the conformation means with respect to the axis of rotation of the rolling means, during the rotation of this latter from the position I to the position II, the distance between the rolling means 400 and the conformation means decreases gradually, so that the radial pressure of the rolling means 400 on the portion 212 of the dough segment 210 against the conformation means 300 increases gradually as well: such an increase of the radial pressure at the end of the rolled up dough segment portion 212 involves the end of the trailing portion 211 during the rolling up of this latter which is achieved by causing the rolling means 400 to rotate clockwise from the above mentioned position II over an angle equal (but having an opposite sign) to the angle corresponding to the first round increased of 360°, so as to bring back the rolling means in a final position III coinciding with the rest position I, in order to repeat the conformation cycle of the final food product 200 shown in Fig. 12: it is just the increased pressure exerted by the rolling means on the superimposed ends of both dough segment portions at the second round thereof-together with the rotation of the rolling means round its own axis-which causes the effective welding of such ends, and thus the production of a food product having the quality of a product produced manually. Of course, it must be understood that in Fig.10 to Fig. 12 the conformation means 300 can be replaced with anyone of the alternative embodiments 310, 320 and 330 shown in Fig.7, Fig.8 and Fig.9, respectively.

## Claims

1. Process of producing loop-shaped food products (200) made from a dough of cereal flour, comprising the following cycle of steps:
- drawing the dough, through a die, into a plurality of parallel dough beads (11);
- conveying on a band (10) and orienting the plurality of dough beads (11), by means of a separator;
- cutting the plurality of oriented dough beads (11), through cutting means (20) perpendicular to the conveying direction, in a plurality of dough segments (210) having a given length and a leading portion (211) and a trailing portion (212);
- shaping the food products (200) from the plurality of dough segments (210) tangentially presented to a plurality of conformation means (300; 310; 320; 330), and
- removing the cutting means (20) and the conformation means (300; 310; 320; 330), while separating from these latter the food products thus shaped, so as to repeat the production cycle,
**characterized in that** by rolling up, one after the other, the leading portion (211) and the trailing portion (212) of each dough segment (210) round a conformation means (300; 310; 320; 330) which is eccentric with respect to its own shaft (301), through at least a plurality of rolling means (400) rotating around their own shaft (401) and the eccentricity (301) of said conformation means (300; 310; 320; 330), the ends of the leading (211) and trailing (212) portions of each dough segment (210) are radially pressed and superimposed by means of the said rolling means (400), and during the rolling up each one of said dough portions is worked by the corresponding rolling means (400).

2. Process according to claim 1, wherein during the rolling up of each one of the half portions (211; 212) of each dough segment (210) it is exerted thereon a pressure which gradually increases from the middle portion of each dough segment (210) towards the corresponding end, in such a way that the radial pressure which is exerted on the superimposed leading (211) and trailing (212) portions of each dough segment (210) is increased with respect to the pressure exerted on the middle portion, thus obtaining the effective welding of the superimposed ends of each dough segment (210).

3. Process according to claim 2, wherein the gradual increase of the pressure exerted on each one of the half portions (211, 212) of each dough segment (210), is obtained by reducing the radial distance separating the rolling means (400) from the corresponding conformation means (300; 310; 320; 330) during the rolling up.

4. Process according to claim 3, wherein the reduction of the radial distance separating the rolling means (400) from the corresponding conformation means (300; 310; 320; 330) is obtained through an asymmetrical transverse section of the conformation means (300; 310; 320; 330) with respect to the rotation axis (301) of the rolling means (400).

5. Process according to anyone of claims 1 to 4, wherein the rolling up of one half dough segment portion (212) is obtained by causing the rotation of the corresponding rolling means (400) according to one direction, from a rest position (I), round the corresponding conformation means (300; 310; 320; 330), over an angle higher than 180° and lower than 360°, the rolling up of the other half dough segment portion (211) being obtained by causing the rotation of the rolling means (400) at least once according to an opposite direction over an angle equal to the former angle increased of 360°, so as to bring again the rolling means (400) in the rest position (I) and repeating the production cycle.

6. Machine for producing loop-shaped food products (200), made from a dough of cereal flour, comprising a die intended to transform the dough into a plurality of parallel dough beads (11); a separator of such dough beads intended to present them at the entry of a shaping unit (100) comprising in turn a conveying band (10) of the plurality of dough beads (11); means (13) for driving such a band (10), this latter being intended to cause the dough beads (11) to move forwards in a direction corresponding to that at the exit from the die and the separator, and a shaping device (110), this latter comprising:
- means (20) for cutting the dough beads (11) into dough segments (210) having a leading portion (211) and a trailing portion (212) with respect to the conveying direction of the band (10), arranged perpendicularly to such a conveying direction;
- a plurality of conformation means (300; 310; 320; 330) of the food products (200) having a height function of the thickness of these latter;
- a plurality of rolling means (400) intended to roll up the leading portion (211) and the trailing portion (212) of each dough segment (210) and to rotate round the corresponding conformation means (300; 310; 320; 330);
- means (500) for driving the rolling means (400) mounted on a support casing (105) of the shaping device (110);
- means (700) for removing from the corresponding conformation means (300; 310; 320; 330) the food product (200) conformed round these latter, and means for lifting from said band (10) said cutting means (20), at the end of each production cycle,
**characterized in that**:
- the conformation means (300; 310; 320; 330), having a vertical support shaft (301) and being arranged according to a plurality of mutually parallel rows perpendicular to the conveying direction of said band (10)are eccentric with respect to their own support shaft (301), **and in that**
- the rolling means (400), which are intended to rotate round the eccentricity (301) of the corresponding conformation means (300; 310; 320; 330), are also intended to rotate around their own support shaft (401) and to roll up, one after the other, the leading portion (211) and the trailing portion (212) of each dough segment (210) round the eccentric conformation means (300; 310; 320; 330), thus radially pressing and superimposing the ends of the leading (211) and trailing (212) portions of each dough segment (210), while working each one of said dough portions during the rolling up of these latter,
wherein the upper ends of the support shafts (301) of the conformation means (300; 310; 320; 330) are fastened to fastening means (101) intended to be driven by driving means (102-103) causing for each production cycle, firstly, their lowering so as to allow the shaping of said food products (200) round each conformation means (300; 310; 320; 330) after causing these latter to rest on the conveying band (10), and secondly their lifting, while removing the shaped food products (200) from the corresponding conformation means (300; 310; 320; 330) through said removing means (700).

7. Machine according to claim 6, wherein each conformation means (300; 310; 320; 330) has a transverse section which is asymmetrical with respect to the rotation axis (301) of the means (400) for rolling up the corresponding dough segment (210).

8. Machine according to claim 7, wherein each conformation means (300) has a circular transverse section, whose axis is eccentric with respect to the rotation axis (301) of the corresponding rolling means (400).

9. Machine according to claim 8, wherein the transverse section of the conformation means (310) is oval, its axis being eccentric with respect to the rotation axis (301) of the corresponding rolling means (400).

10. Machine according to claim 8, wherein the transverse section of the conformation means (320) has a circular portion, whose axis coincides with the rotation axis (301) of the corresponding rolling means (400) and which is thus symmetrical with respect to this axis, and at least a portion asymmetrical with respect to such a rotation axis (301) which consists of a radial projection (321) arranged on the whole height thereof.

11. Machine according claim 8, wherein the transverse section of the conformation means (330) is polygonal, its axis being eccentric with respect to the rotation axis (301) of the corresponding rolling means (400).

12. Machine according to anyone of claims 6 to 11, wherein each conformation means (300; 310; 320; 330) is removable in function of the type of dough.

13. Machine according to claim 12, wherein the lower portion (304) of the conformation means (300; 310; 320; 330) intended to get in contact with the dough segment (210) is removable from the upper portion (303).

14. Machine according to claim 13, wherein the removable lower portion (304) of the conformation means (300; 310; 320; 330) is made from a material suitable for food contact which does not stick to a not oily dough, such as teflon and bronze.

15. Machine according to anyone of claims 6 to 14, wherein each rolling means (400) is removable in function of the type of dough.

16. Machine according to claim 15, wherein the lower portion of the rolling means (400) intended to get in contact with the dough segment (210) is removable from the upper portion.

17. Machine according to claim 16, wherein the removable lower portion of the rolling means (400) is made from a material suitable for food contact which does not stick to a not oily dough, such as teflon and bronze.

18. Machine according to anyone of claims 6 to 17, wherein the transverse section of the rolling means (400) is of the type comprised in the group of sections which are circular, oval and polygonal.

19. Machine according to anyone of claims 6 to 18, wherein the surface of the rolling means (400) has an axial knurling, at least on a height intended to get in contact with the dough segment (210).

20. Machine according to anyone of claims 6 to 19, wherein the rotation of the rolling means (400) round its own axis (401) is achieved at a constant speed.

21. Machine according to claim 19, wherein the rotation of the rolling means (400) round its own axis (401) is achieved at a variable speed function of the type of working of the dough segment immediately before the welding of its ends.

22. Machine according to anyone of claims 6 to 21, wherein each one of the rolling means (400) is driven by the driving means (500) through a connecting means (600) comprising a first and a second hollow cylinders (601, 602), which are kept radial and axially apart through an interconnecting transverse element (603), the first cylinder (601) being coaxial with the support shaft (301) of the corresponding conformation means (300; 310; 320; 330), whilst the second cylinder (602) is coaxial with the support shaft (401) of the same rolling means (400), and wherein the support shaft (401) is mounted so as to rotate freely round itself inside the second cylinder (602) through two ball bearings (604, 605), the rotation of the support shaft (401) being obtained through a gear (607) fastened to the upper end thereof (401) and intended to engage a gear (609) having a greater diameter and fastened to the support casing (105) of the shaping device (110) so as to be coaxial with the first cylinder (601).

23. Machine according to claim 22, wherein the means for removing the food product (200), conformed round each conformation means (300), during the lifting of this latter, consists of a cylindrical cap (700) having at its base a circular projecting rim (701) which is coaxial with the support shaft (301) of the corresponding conformation means (300) and is intended to ensure the removal of the food product (200) from this latter during its lifting by impact against the projecting rim (701) of the cap (700), this latter being maintained in position through a ball bearing (702) fastened to the lower end (610) of the first cylinder (601) and arranged in a seat made in the upper end of the cap (700).

24. Machine according to claim 23 and claim 8, wherein each conformation means (300) has a radial rib (302) arranged on the upper portion (303) thereof and intended to avoid the rotation of the corresponding cylindrical cap (700) round the conformation means (300).

25. Machine according to anyone of claims 6 to 24, wherein the shaping device (110) comprises a slider (115), on which it is mounted and which comprises two legs (116) intended to slide along two rails (117) fastened to the support casing (12) of the conveying band (10) under the action of a driving means (118), and a system for tracking the band (10) causing this latter to advance without any loss of continuity.

## Patentansprüche

1. Herstellungsverfahren für ringförmige Nahrungsmittel (200) die aus einem Getreidemehlteig bestehen, das die folgenden Arbeitsgänge umfasst:
- ziehen des Teiges, durch ein Schneideisen, in eine Pluralität von parallel liegenden Teigbändern (11);
- Transport mit einem Fliesband (10) und Ausrichtung der Teigbänder (11) durch einen Separator;
- schneiden der in einer Pluralität ausgerichteten Teigbänder (11), durch Schneidemittel (20) die senkrecht zu der Beförderungsrichtung stehen, in eine Pluralität von Teigsegmenten (210) die eine gegebene Länge haben und die aus einer Anfangsportion (211) und einer Endportion (212) bestehen;
- formen des Nahrungsmittels (200) aus der Pluralität der Teigsegmente (210) die tangential zu einer Pluralität von Anpassungsmitteln (300; 310; 320; 330) stehen, und
- entfernen der Schneidemittel (20) und der Anpassungsmittel (300; 310; 320; 330) und trennen der geformten Nahrungsmittel von diesen letzteren, um diesen Produktionszyklus zu wiederholen,
**dadurch charakterisiert, dass** bei das Aufrollen, eines nach dem anderen, der Anfangsportion (211) und der Endportion (212) jedes Teigsegments um ein Anpassungsmittel (300; 310; 320; 330) welches exzentrisch bezüglich seiner eigenen Achse (301) ist, durch zuletzt die in einer Pluralität liegender Aufwicklungsmittel (400) die um ihre eigene Achse (401) und der Exzentrizität der genannten Anpassungsmittel (300; 310; 320; 330) drehen, die Enden der Anfangs- (211) und der Endportionen (212) jedes Teigsegments (210) werden durch das Aufwicklungsmittel (400) radialförmig gelegt und überlagert, und während des Aufrollens wird jedes der gesagten Teigportionen von seinem korrespondierenden Aufwicklungsmittel (400) verarbeitet.

2. Verfahren nach dem Patentanspruch 1, wo während des Autrollens jeder der Portionen (211, 212) jeder Teigsegmente (210) ein graduell wachsender Druck von jeder Segmentmitte (210) aus zu der korrespondierenden Extremität ausgeübt wird, so dass der radiale Druck der auf die radial überlagerten Extremitäten der Anfangsportionen (211) und der Endportionen (212) jedes Segments (210) stärker ist als der Druck der in der mittleren Zone ausgeübt wird, dadurch erhält man die Verbindung der überlagerten Extremitäten jedes Teigsegments (210).

3. Verfahren nach dem Patentanspruch 2, wo der graduell steigende Druck der auf jeder Portion (211, 212) jedes Teigsegments (210) ausgeübt wird durch die Verkürzung der radialen Trennungsdistanz zwischen den Aufwicklungsmitteln (400) und den korrespondierenden Anpassungsmitteln (300; 310; 320; 330) erhalten wird.

4. Verfahren nach dem Patentanspruch 3, wo die Verkürzung der radialen Trennungsdistanz zwischen jedem Aufwicklungsmittel (400) und dem korrespondierenden Anpassungsmittel (300; 310; 320; 330) durch die Transversalsektion dieses letzteren, die asymmetrisch bezüglich der Rotationsachse (301) des Aufwicklungsmittels (400) ist, erhalten wird.

5. Verfahren nach einem beliebigen Patentanspruch 1 bis 4, wo das Aufrollen von einer (212) der Portionen jedes Teigsegments (210) durch das, von einer Ruhestellung ausgehend, sich in eine Richtung drehende korrespondierende Aufwicklungsmittel (400) um das ebenso korrespondierende Anpassungsmittel (300; 310; 320; 330) herum, und dies auf einem Winkel der höher als 180° und niedriger als 360° ist, während das Aufrollen der anderen Portion (211) des Segments durch das mindestens einmalige drehen des Aufwicklungsmittels (400) in die gegenüberliegende Richtung mit dem gleichen vorherigen Winkel der um 360° erhöht wird, damit das Aufwicklungsmittel (400) zurück in die Ruhestellung kommt um den Produktionszyklus zu wiederholen.

6. Maschine für die Herstellung von ringförmigen Nahrungsmitteln (200) die aus einem Getreidemehlteig bestehen, die ein Schneideeisen enthält, das für die Verarbeitung des Teiges in eine Pluralität von parallel liegender Teigbänder (11) bestimmt ist; einen Separator enthält, der die Pluralität von Teigbänder am Eingang eines Arbeitsblocks (100) auslegt der seinerseits ein Fliesband (10) hat; Antriebsmittel (13) dieses Bandes (10) enthält, das für die Beförderung der Bänder (11) in die gleiche Richtung des Ausgangs des Schneideeisens und des Separators bestimmt ist, und eine Furmierungsvorrichtung (110) enthält, in dieser letzteren sind enthalten:
- Schneidemittel (20) der Teigbänder (11) in Segmente (210) die aus einer Anfangsportion (211) und einer Endportion (212) bestehen, die bezüglich der Richtung des Fliesbandes (10), senkrecht zu dieser Beförderungsrichtung angeordnet sind;
- eine Pluralität von Anpassungsmitteln (300; 310; 320; 330) der Nahrungsmittel (200) die eine entsprechende Höhe zu der Dicke dieser letzteren haben;
- eine Pluralität von Aufwicklungsmitteln (400), die zum Aufwickeln der Anfangsportionen (211) und Endportionen (212) der Teigsegmente (210) und sich um die korrespondierenden Anpassungsmittel (300; 310; 320; 330) zu drehen, bestimmt ist;
- eine Antriebsvorrichtung (500) der Aufwicklungsmittel (400), die auf ein Stützgerüst (105) der Formierungsvorrichtung (110) montiert ist;
- ein Trennmittel (700) zum trennen des Nahrungsmittels (200) vom Anpassungsmittel (300; 310; 320; 330) während des Anhebens, das um dieses letzteren geformt ist, und
- eine Hebevorrichtung der Schneidemittel (20), um diese letzteren am Ende des Herstellungsverfahren von dem Fiesband anzuheben und zu trennen,
**dadurch charakterisiert, dass:**
- die Anpassungsmittel (300; 310; 320; 330), die eine vertikale Stützachse (301) haben und die in einer Pluralität von parallelliegenden Reihen senkrecht zur Beförderungsrichtung des Fliesbandes (10) angeordnet sind, exzentrisch beztlglich der eigenen Stützachse (301) sind, **und dass**
- die Aufwicklungsmittel (400), die sich um die Exzentrizität (301) der Anpassungsmittel (300; 310; 320; 330) und der eigenen Stützachse (401) zu drehen bestimmt sind und zum Aufwickeln um die exzentrische Anpassungsmittel (300; 310; 320; 330) eins nach dem anderen der Anfangsportion (211) und der Endportion (212) von jedem Teigsegment (210) bestimmt sind, um so die Extremitäten der Anfangs-(211) und Endportion (212) jedes Teigsegments (210) übereinander zulegen und zusammenzudrücken, beim gleichzeitigen Bearbeiten jeder Teigportion während der Aufwicklung dieser letzeren,
wo die oberen Extremitäten der Stützachsen (301) der Anpassungsmittel (300; 310; 320; 330) mit Befestigungsmitteln (101) verbunden sind, die während jedem Herstellungsverfahren von einer Antriebsvorrichtung (102-103) angetrieben zu werden bestimmt sind, um erstens ihre Senkung für die Bearbeitung der Nahrungsmittel (200) um jedem Anpassungsmittel (300; 310; 320; 330), nach ihrem Auflegen auf dem Fliesband (10), und zweitens ihre Hebung zu bewirken, beim gleichzeitigen Entfernen der Nahrungsmittel (200) von den korrespondierenden Anpassungsmitteln (300; 310; 320; 330) durch das vorgenannte Trennmittel (700).

7. Maschine nach dem Patentanspruch 6, wo jedes Anpassungsmitel (300; 310; 320; 330) eine asymmetrische Transversalsektion bezüglich der Rotationsachse (301) des Aufwicklungsmittels (400) des korrespondierenden Teigsegmentes (210) hat.

8. Maschine nach dem Patenanspruch 7, wo jedes Anpassungsmittel (300), eine kreisförmige Transversalsektion hat, deren Achse exzentrisch bezüglich der Rotationsachse (301) des korrespondierenden Aufwicklungsmittels (400) ist.

9. Maschine nach dem Patentanspruch 8, wo die Sektion des Anpassungsmittels (310) oval mit der exzentrischen Achse bezüglich der Rotationsachse (301) des Aufwicklungsmittels (400) ist.

10. Maschine nach dem Patentanspruch 8, wo die Sektion des Anpassungsmittels (320) eine kreisförmige Portion hat deren Achse mit der Rotationsachse (301) des korrespondierenden Aufwicklungsmittels (400) übereinstimmt und deshalb symmetrisch bezüglich dieser Achse ist, und mindestens eine asymmetrische Portion bezüglich dieser Rotationsachse (301) besteht aus einem radialen Vorsprung (321) der aus seiner gesamten Höhe gewonnen wird.

11. Maschine nach dem Patentanspruch 8, wo die Sektion des Anpassungsmittels (330) polygonal mit der exzentrischen Achse bezüglich der Rotationsachse (301) des Aufwicklungsmittels (400) ist.

12. Maschine nach einem beliebigen Patentanspruch 6 bis 11, wo jedes Anpassungsmittel (300; 310; 320; 330) verstellbar in Funktion des Teig Typs ist.

13. Maschine nach dem Patentanspruch 12, wo die untere Portion (304) des Anpassungsmittels (300; 310; 320; 330) für den Kontakt mit dem Teigsegment bestimmt ist, von der oberen Portion (303) trennbar ist.

14. Maschine nach dem Patentanspruch 13, wo die trennbare untere Portion (304) des Anpassungsmittels (300; 310; 320; 330) aus Teflon oder Bronze ist, um auch Teig ohne Öl zu verarbeiten.

15. Maschine nach einem beliebigen Patentanspruchs 6 bis 14, wo jedes Aufwicklungsmittel (400) verstellbar in Funktion des Teig Typs ist.

16. Maschine nach dem Patentanspruch 15, wo die untere Portion des Aufwicklungsmittels (400) die für den Kontakt mit dem Teigsegment bestimmt ist, von der oberen Portion trennbar ist.

17. Maschine nach dem Patentanspruch 16, wo die untere Portion des Aufwicklungsmittels (400) aus Teflon oder Bronze ist, um auch Teig ohne Öl zu verarbeiten.

18. Maschine nach einem beliebigen Patentanspruch 1 bis 17, wo der Typ der Transversalsektion des Aufwicklungsmittels (400) in der Sektionsgruppe einbegriffen ist, inbegriffen der kreisförmigen Sektion, der ovalen Sektion und der polygonalen Sektion.

19. Maschine nach einem beliebigen Patentanspruch 1 bis 16, wo die Oberfläche des Aufwicklungsmittels (400) mindestens bis zu seiner Nutzhöhe eine Achsenrändelung hat.

20. Maschine nach einem beliebigen Patentanspruch 1 bis 19, wo die Drehung des Aufwicklungsmittels (400) um seine eigen Achse (401) mit einer konstanten Geschwindigkeit erfolgt.

21. Variante bezüglich des Patentanspruchs 19, wo die Drehung des Aufwicklungsmittels (400) um seine eigene Achse (401) mit variabler Geschwindigkeit erfolgt.

22. Maschine nach einem beliebigen Patentanspruch 1 bis 21, wo jedes Aufwicklungsmittel (400) durch eine Betriebsvorrichtung (500) in Gang gesetzt wird mittels eines Verbindungsmittels (600), das zwei hohle Zylinder (601, 602) hat, die radial und axial verschoben und durch ein transversales Element (603) verbunden sind, wo der erste Zylinder (601) koaxial mit der vertikalen Stützstange (301) des korrespondierenden Anpassungsmittels (300; 310; 320; 330) ist, während der zweite Zylinder (602) koaxial mit der vertikalen Stützstange (401) des gleichen Aufwicklungsmittels (400) ist, und wo diese letztere Stange (401) im inneren des zweiten Zylinders (602) mittels zwei Lager (604, 605) montiert ist, damit sie sich frei um sich selbst drehen kann, diese Drehung wird durch ein Zahnrad (609) das an ihrer oberen Extremität befestigt ist, erhalten, dieses letztere ist bestimmt in ein weiteres Zahnrad (609) zu greifen, das einen größeren Durchmesser hat und das an dem Gerüst (105) der Formierungsvorrichtung (110) koaxial und äußerlich am ersten Zylinder (601) befestigt ist.

23. Maschine nach dem Patentanspruch 22, wo das Trennmittel des Nahrungsmittels (200) das um jedes Anpassungsmittel (300; 310; 320; 330) geformt ist, während des Anhebens dieses letzteren, aus einem hutförmigen Zylinder (700) besteht der an seiner Basis einen kreisförmigen vorstehenden Rand (701) hat, der koaxial mit der Stützstange (301) des Anpassungsmittels (300; 310; 320; 330) ist und bestimmt ist die Hebe- und die Senkbewegung des Anpassungsmittels zu ermöglichen und das Ablösen des Nahrungsmittels (200) von diesem letzteren während seines Anhebens, durch den Stoß gegen den vorstehenden Rand (701) des Hutes (700), zu bewirken, dieser letztere wird durch ein Lager (702), das an der unteren Extremität des ersten Zylinders (601) befestigt ist, in Position gehalten und ist in einer Stelle in der oberen Extremität desselben Hutes (700) angeordnet.

24. Maschine nach dem Patentanspruch 23 und dem Patentanspruch 8, wo jedes Anpassungsmittel (300) eine radiale Rippe (302) zum blockieren der Drehung des korrespondierenden Trennmittels (700) hat, bezüglich diesem Anpassungsmittel (300) wird sie aus der oberen Portion (303) dieses letzteren gewonnen.

25. Maschine nach einem beliebigen Patentanspruch 6 bis 24, wo die Formierungsvorrichtung (110) einen Schieber (115) hat, worauf diese montiert ist, bestehend aus zwei Füßen (116) die vorgesehen sind um auf zwei Schienen (117) die am Stützgerüst (12) des Fliesbandes (10) befestigt sind, mittels eines Motors (118) zu gleiten, und ein Beförderungssystem des Fliesbandes (10) an jedem Produktionszyklus der Nahrungsmittel (200), das das Fortschreiten des Bandes (10) ohne Unterbrechung ermöglicht.

## Revendications

1. Méthode de production de produits alimentaires (200) ayant la forme générale d'une couronne et réalisés à partir d'une pâte de farine de céréales, comprenant le cycle d'opérations suivant :
- étirement de la pâte, au moyen d'une filière, en plusieurs cordons de pâte parallèles (11);
- transport sur un tapis roulant (10) et séparation ciblée des différents cordons de pâte (11), au moyen d'un séparateur;
- coupe des différents cordons de pâte (11), à l'aide de moyens tranchants (20) perpendiculaires au sens de transport, en différents segments de pâte (210) de longueur désirée, présentant chacun une portion d'attaque (211) et une portion de fuite (212) ;
- formation des produits alimentaires (200) à partir de la pluralité de segments de pâte (210) présentés tangentiellement à une pluralité de moyens de conformation (300;310; 320; 330), et
- retrait des moyens de coupe (20) et des moyens de conformation (300; 310; 320; 330), tout en écartant de ces derniers les produits alimentaires (200) ainsi formés, de façon à répéter le cycle de production,
**caractérisé en ce que**, en enroulant, l'une après l'autre, la portion d'attaque (211) et la portion de fuite (212) de chacun des segments de pâte (210) autour d'un moyen de conformation (300; 310; 320; 330) qui est excentrique par rapport à son propre axe (301), par l'intermédiaire d'une pluralité de moyens d'enroulement (400) tournant autour de leur propre axe (401) et de l'excentricité (301) desdits moyens de conformation (300; 310; 320; 330), les extrémités des portions d'attaque (211) et des portions de fuite (212) de chaque segment de pâte sont comprimées radialement et superposées à l'aide desdits moyens d'enroulement (400), et **en ce que** pendant l'enroulement chacune desdites portions de pâte est travaillée par le moyen d'enroulement correspondant (400).

2. Méthode selon la revendication 1, **caractérisée en ce que**, pendant l'enroulement de chacune des portions (211,212) de chacun des segments de pâte (210), il se produit une pression, exercée sur ces portions, qui augmente graduellement depuis la zone intermédiaire de chaque segment (210) vers l'extrémité correspondante, de manière à ce que la pression radiale exercée sur les extrémités superposées radialement de la portion d'attaque (211) et de la portion de fuite (212) de chaque segment, soit augmentée par rapport à la pression exercée sur la zone intermédiaire, obtenant ainsi la jonction des extrémités superposées de chaque segment (210).

3. Méthode selon la revendication 2, **caractérisée en ce que** l'augmentation graduelle de la pression exercée sur chacune des portions (211,212) de chaque segment de pâte (210) est obtenue par réduction de la distance de séparation radiale entre les moyens d'enroulement (400) et les moyens de conformation correspondants (300; 310; 320; 330).

4. Méthode selon la revendication 3, **caractérisée en ce que** la réduction de la distance de séparation radiale entre chacun des moyens d'enroulement (400) et le moyen de conformation correspondant (300; 310; 320; 330), est obtenu en rendant asymétrique la section transversale de ce dernier par rapport à l'axe de rotation (301) du moyen d'enroulement (400).

5. Méthode selon l'une quelconque des revendications 1 à 4, **caractérisée en ce que** l'enroulement d'une (212) des portions de chaque segment de pâte (210) est obtenu en faisant tourner dans un sens l'outil d'enroulement correspondant (400), à partir d'une position de repos, autour du moyen de conformation également correspondant (300; 310; 320; 330), et ce dans un angle compris entre 180 degrés et 360 degrés, alors que l'enroulement de l'autre portion (211) du segment est obtenu en faisant tourner le moyen d'enroulement (400) au moins une fois dans le sens contraire, avec un angle équivalent à l'angle précédent augmenté de 360 degrés, de manière à remettre le moyen d'enroulement dans sa position initiale et à répéter le cycle de production.

6. Machine pour la production de produits alimentaires (200) ayant la forme générale d'une couronne et réalisés à partir d'une pâte de farine de céréales, comprenant une filière destinée à transformer la pâte en différents cordons de pâte parallèles (11) ; un séparateur des différents cordons de pâte pour les présenter à l'entrée d'un bloc de formation (100) comprenant à son tour un tapis roulant (10) de transport des différents cordons de pâte (11) ; des moyens (13) d'actionnement du tapis roulant (10), qui est destiné à faire avancer les cordons (11) dans un sens correspondant à celui de la sortie de la filière et du séparateur, et un dispositif de formation (110), ce dernier comportant :
- des moyens (20) de coupe des cordons de pâte (11) en segments (210) présentant une portion d'attaque (211) et une portion de fuite (212) par rapport au sens dans lequel avance le tapis roulant (10), disposés perpendiculairement par rapport à ce sens d'avancement;
- une pluralité de moyens de conformation (300; 310; 320; 330) des produits alimentaires (200) de hauteur adaptée à l'épaisseur de ces derniers ;
- une pluralité de moyens d'enroulement (400) destinés à enrouler la portion d'attaque (211) et la portion de fuite (212) de chaque segment de pâte (210) et à tourner autour des moyens de conformation correspondants (300; 310; 320; 330);
- un dispositif (500) d'actionnement des moyens d'enroulement (400) monté sur l'armature de soutien (105) du dispositif de formation (110) ;
- un moyen (700) de détachement du moyen de conformation (300; 310; 320; 330) du produit alimentaire (200) conformé autour de ce dernier, et
- des moyens de soulèvement du tapis roulant (10) desdits moyens de coupe (20)., à la fin de chaque cycle de production,
**caractérisée en ce que** :
- les moyens de conformation (300; 310; 320; 330), ayant un axe de support vertical (301) et disposés selon une pluralité de rangées parallèles perpendiculairement à la direction d'avancement du tapis roulant (10), sont excentriques par rapport à leur propre axe de support (301), et **en ce que**
- les moyens d'enroulement (400), qui sont destinés à tourner autour de l'excentricité (301) des moyens de conformation correspondants (300; 310; 320; 330), sont aussi destinés à tourner autour de leur propre axe de support (401) et à enrouler, l'une après l'autre, la portion d'attaque (211) et la portion de fuite (212) de chaque segment de pâte autour des moyens de conformation excentriques (300; 310; 320; 330), comprimant radialement et superposant ainsi les extrémités des portions d'attaque (211) et de fuite (212) de chaque segment de pâte (210), tout en travaillant chacune de ces portions pendant leur enroulement,
les extrémités supérieures des axes de support (301) des moyens de conformation (300; 310; 320; 330) étant fixées à des moyens de fixation (101) destinés à être actionnés par des moyens d'actionnement (102.103) qui déterminent, pour chaque cycle de production, premièrement, leur abaissement de façon à permettre la conformation desdits produits alimentaires (200) autour de chaque moyen de conformation (300; 310; 320; 330) après avoir fait descendre ces derniers pour prendre appui sur le tapis roulant (10), et, deuxièmement, leur soulèvement, tout en détachant les produits alimentaires conformés (200) des moyens de conformation (300; 310; 320; 330) correspondant à l'aide desdits moyens de détachement (700).

7. Machine selon la revendication 6, **caractérisée en ce que** chaque moyen de conformation (300; 310; 320; 330) présente une section transversale asymétrique par rapport à l'axe de rotation (301) du moyen d'enroulement (400) du segment de pâte correspondant (210)

8. Machine selon la revendication 7, **caractérisée en ce que** chaque moyen de conformation (300; 310; 320; 330) présente une section transversale circulaire, dont l'axe est excentrique par rapport à l'axe de rotation (301) du moyen d'enroulement correspondant (400).

9. Machine selon la revendication 8, **caractérisée en ce que** la section du moyen de conformation (310) est ovale, avec l'axe excentrique par rapport à l'axe de rotation (301) du moyen d'enroulement correspondant (400).

10. Machine selon la revendication 8, **caractérisée en ce que** la section du moyen de conformation (320) présente une partie circulaire ayant l'axe coïncidant avec l'axe de rotation (301) du moyen d'enroulement correspondant (400), et donc symétrique par rapport à cet axe, et au moins une partie asymétrique par rapport à cet axe de rotation (301) constitué par une aspérité saillante radiale (321) produite sur toute sa hauteur.

11. Machine selon la revendication 8, **caractérisée en ce que** la section du moyen de conformation (330) est polygonale, avec l'axe excentrique par rapport à l'axe de rotation (301) du moyen d'enroulement correspondant (400).

12. Machine selon l'une quelconque des revendications 6 à 11, **caractérisée en ce que** chaque moyen de conformation (300; 310; 320; 330) est amovible en fonction du type de pâte.

13. Machine selon la revendication 12, **caractérisée en ce que** la partie inférieure (304) du moyen de conformation (300; 310; 320; 330), destinée à venir en contact avec le segment de pâte, est séparable de la partie supérieure (303).

14. Machine selon la revendication 13, **caractérisée en ce que** la partie inférieure séparable (304) du moyen de conformation (300; 310; 320; 330), est réalisée dans un matériau alimentaire anti-adhérent destiné à une pâte sans huile, tel que téflon ou bronze.

15. Machine selon l'une quelconque des revendications 6 à 14, **caractérisée en ce que** chaque moyen d'enroulement (400) est amovible en fonction du type de pâte.

16. Machine selon la revendication 15, **caractérisée en ce que** la partie inférieure du moyen d'enroulement (400) destinée à venir en contact avec le segment de pâte (210) est séparable de la partie supérieure.

17. Machine selon la revendication 16, **caractérisée en ce que** la partie inférieure séparable du moyen d'enroulement (400) est réalisée dans un matériau alimentaire anti-adhérent destiné à une pâte sans huile, tel que téflon ou bronze.

18. Machine selon l'une quelconque des revendications 1 à 17, **caractérisée en ce que** la section transversale du moyen d'enroulement (400) est du type compris dans le groupe de sections comprenant la section circulaire, la section ovale et la section polygonale.

19. Machine selon l'une quelconque des revendications 1 à 16, **caractérisée en ce que** la superficie du moyen d'enroulement (400) présente une crénelure axiale au moins sur sa hauteur utile.

20. Machine selon l'une quelconque des revendications 1 à 19, **caractérisée en ce que** la rotation du moyen d'enroulement (400) autour de son axe (401) se produit à vitesse constante.

21. Machine selon la revendication 19, **caractérisée en ce que** la rotation du moyen d'enroulement (400) autour de son axe (401) se produit à vitesse variable.

22. Machine selon l'une quelconque des revendications 1 à 21, **caractérisée en ce que** chaque moyen d'enroulement (400) est actionné par le dispositif d'actionnement (500) à l'aide d'un moyen de liaison (600) comprenant un premier et un deuxième cylindres creux (601,602), qui sont écartés radialement et axialement au moyen d'un élément transversal d'interconnexion (603), dont le premier cylindre (601) est co-axial à la barre de soutien verticale (301) du moyen de conformation correspondant (300; 310; 320; 330), tandis que le second cylindre (602) est co-axial à la barre de soutien verticale (401) du même moyen d'enroulement (400), et **en ce que** l'axe de support (401) est monté libre de tourner autour de lui-même à l'intérieur du second cylindre (602) au moyen de deux roulements à billes (604,605), sa rotation étant obtenue grâce à une roue dentée (607) fixée à son extrémité supérieure et destinée à s'engrener avec une roue dentée (609) de diamètre supérieur fixée à l'armature (105) du dispositif de formation (110) coaxialement et extérieurement au premier cylindre (601).

23. Machine selon la revendication 22, **caractérisée en ce que** le moyen de détachement du produit alimentaire (200) conformé autour de chaque moyen de conformation (300; 310; 320; 330), pendant le soulèvement de ce demier, est constitué par un chapeau cylindrique (700) comportant à la base un bord circulaire saillant (701), lequel est coaxial à la barre de soutien (301) du moyen de conformation correspondant (300; 310; 320; 330), et est destiné à accomplir le mouvement de soulèvement et d'abaissement du moyen de conformation et à favoriser le détachement du produit alimentaire (200) de ce dernier pendant son soulèvement, par le choc avec le bord saillant (701) du chapeau (700), ce dernier étant maintenu en position grâce à un écrou (702) fixé à l'extrémité inférieure du premier cylindre (601) et placé dans un endroit situé dans l'extrémité supérieure de ce même chapeau (700).

24. Machine selon la revendication 23 et la revendication 8, **caractérisée en ce que** chaque moyen de conformation (300) présente une nervure radiale (302) disposée sur sa partie supérieure (303) et destinée à empêcher la rotation du chapeau cylindrique correspondant (700) autour du moyen de conformation (300).

25. Machine selon l'une quelconque des revendications 6 à 24, **caractérisée en ce que** le dispositif de formation (110) comporte un curseur (115), sur lequel il est monté et qui comprend deux pieds (116) destinés à glisser sur deux rails (117) fixés à l'armature de soutien (12) de la chaîne de montage (10) sous l'action d'un moteur (118), et un système de poursuite du tapis (10) faisant avancer ce dernier sans solution de continuité.
